# EUROPÄISCHE PATENTSCHRIFT

(11) **EP 0 424 563 B1**
(45) Veröffentlichungstag und Bekanntmachung des Hinweises auf die Patenterteilung: **03.03.1993**
(21) Anmeldenummer: 89119809.5
(22) Anmeldetag: 25.10.1989
(51) Int. Cl.: B65G 35/06, B65G 17/00, B23Q 7/14

(54) **Vorrichtung an einem Horizontalförderer zum Arretieren einer Palette**
Horizontal conveyor with an arresting device for a pallet
Transporteur horizontal équipé d'un dispositif pour arrêter une palette

(43) Veröffentlichungstag der Anmeldung: 02.05.1991
(73) Patentinhaber: Weiss, Dieter, D-74722 Buchen (DE)
(72) Erfinder: Weiss, Dieter, D-74722 Buchen (DE)
(74) Vertreter: Hach, Hans Karl

(56) Entgegenhaltungen:
- EP-A- 0 050 080
- WO-A-89/10234
- DE-A- 3 224 330
- FR-A- 2 071 993
- FR-A- 2 228 012
- US-A- 3 650 373

## Beschreibung

Die Erfindung betrifft eine Vorrichtung zum Fördern von horizontal liegenden, stabilen Paletten, wie sie im Oberbegritt des Anspruchs 1 beschrieben ist.

Eine bekannte Vorrichtung dieser Art ist. Z.B. in der FR-A-2.228.012 dargestellt.

Aufgabe der Erfindung ist es, diese Vorrichtung zu vereinfachen.

Erfindungsgemäß wird die genannte Aufgabe durch die im Kernseichen des Anspruchs 1 angegebenen Merkmale gelöst.

Während bei der bekannten Vorrichtung die zum Fixieren der Palette vorgesehenen Greifer aktiv bewegt werden müssen, müssen die zu dem gleichen Zweck vorgesehenen Keilelemente aktiv nicht bewegt werden, sie werden allenfalls von der betreffenden Palette bewegt.

Als Keilelemente werden Rollen eingesetzt, um Gleitwiderstand zu vermeiden. Die Keilflächen bilden eine dachförmige, mit abgeflachter Spitze nach außen ragende Randrippe wobei die Keilelemente um vertikale Achsen drehbar gelagerte Rollen sind, die je eine keilförmige Umfangsnut aufweisen.

Allein dadurch ist eine beträchtliche Vereinfachung der konstruktiven Ausgestaltung möglich, die auch eine Verbesserung der Betriebssicherheit zur Folge hat.

Die Keilelemente sind so ausgebildet, daß sie die in Bearbeitungsposition geratende Palette von den Gurtbändern abheben und damit schleifenden Kontakt der weiter umlaufenden Gurtbänder beim Bearbeiten der Palette beziehungsweise der Auflage der Palette vermeiden. Ein oder mehrere Keilelemente sind beidseitig am förderabwärtigen Ende einer in Bereitstellungsposition befindlichen Palette angeordnet, wobei die Höhenlage dieser der Bereitstellungsposition zugeordneten Keilelemente jeder Seite der Höhenlage einer auf den Gurtbändern liegenden Palette entspricht und wobei die Höhenlage der folgenden, der Bearbeitungsposition zugeordneten Keilelemente der Höhenlage einer von den Gurtbändern um einen zur Entkupplung hinreichenden kleinen Betrag abgehobenen Palette entspricht.

Die der Bereitstellungsposition zugeordneten Keilelemente justieren in wünschenswerter Weise das vorauslaufende Ende der in Bereitstellungsposition befindlichen Palette und erleichtern so den Einlauf dieser Palette in die der Bearbeitungsposition zugeordneten Keilelemente. Für den notwendigen Höhenausgleich trifft man zweckmäßigerweise Maßnahmen an den der Bereitstellungsposition zugeordenten Keilelementen. Das kann beispielsweise dadurch geschehen, daß die Keilform der der Bereitstellungsposition zugeordneten Keilelemente das für den Höhenausgleich nötige Spiel bieten oder dadurch, daß die der Bereitstellungsposition zugeordneten Keilelemente zum Höhenausgleich zwischen zwei Endstellungen höhenverstellbar sind.

Die der Bearbeitungsposition zugeordneten Keilelemente wer den zweckmäßig im Interesse einer soliden Fixierung der Palette, bezogen auf alle räumlichen Richtungen, ortsfest befestigt.

Zum Erleichtern des Anhebens des rückwärtigen Endes einer in die Bearbeitungsposition einlaufenden Palette sind vorzugsweise beidseitig je zwei Keilelemente dicht am förderaufwärtigen Ende der Bearbeitungsposition und dicht nebeneinander angeordnet.

Bei einer weiteren bevorzugten Ausführungsform der Erfindung wird die Wechselgeschwindigkeit, dadurch erhölt, daß ein auf die in Bereitstellungsposition befindliche Palette einwirkendes Förderelement zum Fördern dieser Palette beim Palettenwechsel in die Bearbeitungsposition vorgesehen ist. Der patellen wechset erfolgt mit einer Geschwindigkeit, die wesentlich höher ist als die Fördergeschwindigkeit des Doppelgurtes.

Die Erfindung macht sich dabei den Umstand zunutze, daß die Paletten auf dem Doppelgurt rutschen können, wie sie es in Bereitstellung bei dem bekannten Palettenwechsler auch tun, also auch schneller auf dem Doppelgurt vorausgeschoben werden können als der Umlaufgeschwindigkeit des Doppelgurtes entspricht.

Die beiden bei der bekannten Vorrichtung vorgesehenen, der Bereitstellungsposition und in der Bearbeitungsposition zugeordneten Anschläge, die auch nach der Erfindung erforderlich sind, werden vorteilhaft konstruktiv in das Förderelement integriert, so daß man anstatt zwei beweglicher Anschläge wie beim Stande der Technik nur ein einziges bewegliches Förderelement antreiben muß. Die entsprechende Weiterbildung ist dadurch gekennzeichnet, daß das Förderelement die beiden Anschläge aufweist und bei Beginn der Förderbewegung des Förderelementes außer Funktion stellt und bei Ende der Förderbewegung wieder in Funktion stellt.

Eine bevorzugte Ausgestaltung eines solchen Förderelementes, die sich durch besonders einfachen konstruktiven Aufbau und exakte Positionierbarkeit der Anschläge und damit der Bereitstellungsposition und insbesondere der Bearbeitungsposition auszeichnet, ist dadurch gekennzeichnet, daß das Förderelement eine Walze ist, die um eine Achse parallel zur Förderrichtung drehbar gelagert ist, und auf ihrem Umfang eine mit einem an der Palette angeordneten Führungselement zusammenwirkende Führungswendel aufweist, die sich vom Anschlag für die Bereitstellungsposition bis zum Anschlag für die Bearbeitungsposition erstreckt und 1 bis 5, vorzugsweise 2 Gänge aufweist.

Dabei empfiehlt es sich, daß die Walze mit ihrer Achse senkrecht zur Mittellinie des Doppelgurtes gelagert ist, daß die Führungswendel eine Führungsnut ist, daß die Führungsnut an beiden Enden einen den betreffenden Anschlag bildenden, sich in Umfangsrichtung erstreckenden Nutenabschnitt aufweist und offen ist, daß die beiden Nutenabschnitte sich über den gleichen Umfangswinkel erstrecken, daß in die Führungsnut ein vorzugsweise als Führungsrolle ausgebildetes Führungselement paßt, das unten an der Längsmitte einer jeden Palette gelagert ist.

Für einen reibungslosen Wechselvorgang ist es wichtig, daß die in Bearbeitungsposition befindliche Palette möglichst schnell abgefördert wird. Dazu sollte sie möglichst schnell ihre Trägheit überwinden und die Geschwindigkeit des Doppelgurtes aufnehmen. Das kann man unterstützen, indem dieser Palette bei Beginn des Wechselvorganges von dem Förderelement ein Schubs verliehen wird. Das ist sehr einfach dadurch erzielbar, daß der der Bearbeitungsposition zugeordnete Nutenabschnitt in einen achsparallel gerichteten Auslaufabschnitt mündet mit einer Austriebskurve an der Rückwand.

Eine ausgewählte Ausführungsform der Erfindung wird nun anhand der beigefügten Zeichnung näher erläutert.

In der Zeichnung zeigt:
Figur 1 einen Palettenwechsler für einen linearen Horizontalförderer von oben gesehen, teilweise aufgeschnitten,
Figur 2 den Teilschnitt II aus Figur 1,
Figur 3 die Walze aus Figur 1 von oben gesehen mit den Führungselementen der zugehörigen Paletten,
Figur 4 den Schnitt IV aus Figur 2,
Figur 5 den Schnitt V aus Figur 2,
Figur 6 eine Einzelheit gemäß dem Teilschnitt VI aus Figur 1,
Figur 7 eine Einzelheit gemäß dem Teilschnitt VII aus Figur 1 und
Figur 8 in der Darstellung entsprechend Figur 6 eine Abänderung des in Figur 1 bis 7 dargestellten Ausführungsbeispiels.

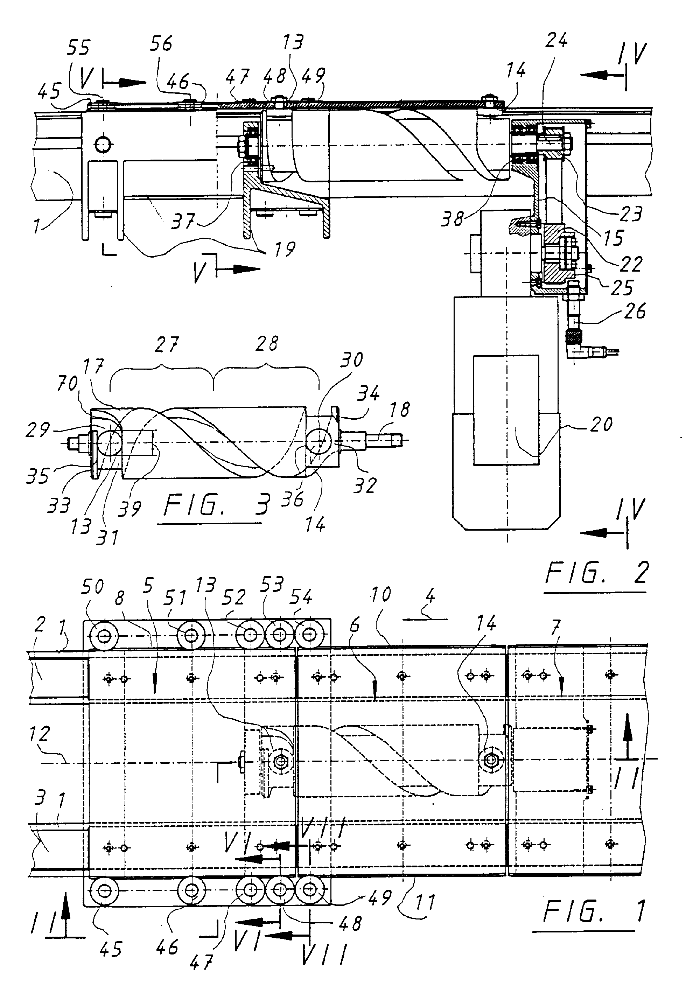

Der Horizontalförderer 1, von dem in Figur 1 und 2 nur ein kurzer Abschnitt dargestellt ist, weist zwei endlos umlaufende Gurtbänder 2 und 3 auf, deren obere Trumms in Figur 1 sichtbar sind und die eine horizontale, ständig in Pfeilrichtung 4 fortbewegte Unterlage für dort aufliegende Paletten, zum Beispiel die Paletten 5, 6 und 7 bilden. Die Paletten sind aufstaubar, das heißt an jede Palette, die auf den Gurtbändern 2, 3 liegt, kann die nachfolgende hinten anstoßen und die vordere vor sich herschieben.

Die Paletten 5, 6 und 7 sind rechteckige, stabile Platten mit beidseitig Randschienen 8 bis 11, die sich jeweils über die ganze Palettenlänge in Förderrichtung gemäß Pfeil 4 erstrecken. Jede Palette weist in ihrer Längsmitte 12, und zwar an ihrem förderaufwärtigen Ende, einen an der Unterseite herausragenden als Führungsrolle ausgebildete Mitnehmer 13, 14 auf. Diese Mitnehmer passen in die Führungsnut 16 einer Walze 17, die mit ihrer Achse 18 in Förderrichtung, also horizontal, unter der Mitte zwischen den Gurtbändern 2 und 3, die mit der Längsmitte 12 zusammenfällt, drehbar in Lagern 37, 38 gelagert ist. Das Lager 37 ist in einem Arretierergehäuse 19 und das Lager 38 in einem Wechslergehäuse 15 angeordnet. Die beiden Gehäuse 15 und 19 sind an durchgehenden Profilstangen des Horizontalförderers 1 befestigt.

Zum Antrieb der Walze dient ein Antriebsmotor 20, der eine Nockenscheibe 21 und eine koaxial und verdrehungssicher dazu auf die Motorabtriebswelle aufgesteckte Keilriemenscheibe 22 treibt. Diese Keilriemenscheibe treibt im Übersetzungsverhältnis 1 : 2 die Keilriemenscheibe 23, die auf der Walzenwelle 24 steckt. Die Nockenscheibe 21 weist einen Nocken 25 auf, demgegenüber ein Schalter 26 steht, der bei Gegenüberstellung des Schalters zum Nocken 25 den Antriebsmotor 20 abschaltet. Bei der nächsten Wiedereinschaltung des Antriebsmotors, die von einer nicht dargestellten Steuervorrichtung des Horizontalförderers ausgelöst wird, vollführt die Nockenscheibe 21 eine volle Umdrehung und die Walze 17 zwei volle Umdrehungen.

In allen Zeichnungen ist die Walze im Stillstand gezeichnet. Die Führungsnut 16 weist zwei volle Gänge auf. Die Führungsnut 16 weist an ihren beiden Enden je einen sich in Umfangsrichtung erstreckenden Nutenabschnitt 29, 30 auf, der über einen axialen Einlaufabschnitt 32 und einen axialen Auslaufabschnitt 31 an der betreffenden Stirnseite 33, 34 offen ist, und zwar der Abschnitt 31 mit einer Austriebskurve 70.

Die beiden Nutenabschnitte 29 und 30 bilden je einen Anschlag 35, 36. Der Anschlag 35 fixiert die Palette 5 in der Bearbeitungsposition und der Anschlag 36 fixiert die Palette 6, das ist die in der Reihe der nachfolgenden Paletten nächstfolgende, in Bereitstellungsposition. Die beiden Nutenabschnitte 29, 30 und die beiden Anschläge 35, 36 erstrecken sich über den gemeinsamen Umfangswinkel 39, der mithin die Toleranz bestimmt für eine funktionsfähige Stillstandsstellung der Walze 17. Dem entspricht die Umfangsausdehnung des Nocken 25.

In der gezeichneten Stillstandsstellung der Walze 17 sind die beiden Paletten 5 und 6 durch die Anschläge 35, 36 präzise, bezogen auf die Förderrichtung, fixiert. Die Palette 6 ruht dabei auf den Gurtbändern 2 und 3, die unter der Palette während des Stillstandes der Palette 6 in der Bereitstellungsposition gleiten. Das gleiche gilt für alle nachfolgenden Paletten, die auf die Palette 6 auflaufen und dadurch ebenfalls stillgesetzt werden.

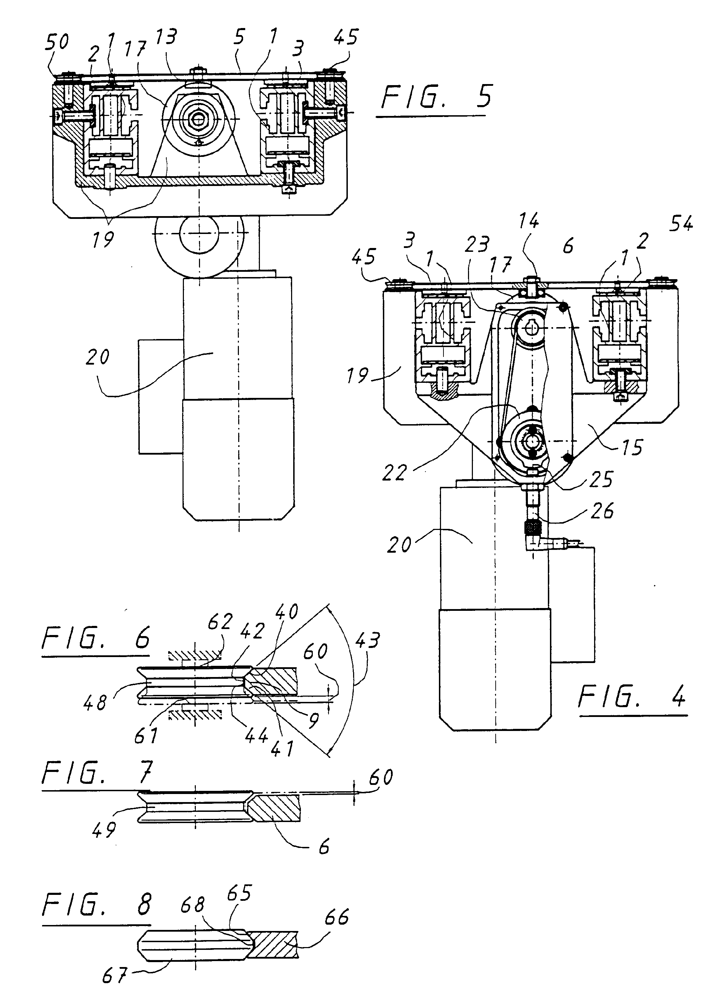

Die Randschienen 8, 9, 10 und 11 der Paletten sind, wie besonders gut aus Figur 6 ersichtlich, dachförmige, mit abgeflachter Spitze nach außen ragende Randrippen, die durch je zwei Keilflächen 40, 41 und eine Stirnfläche 42 gebildet werden. Die Keilflächen stehen im Winkel 43 zueinander und die Stirnfläche 42 steht senkrecht zu der durch die Gurtbänder 2 und 3 definierten Unterstützungsebene und symmetrisch zu den Keilflächen 40, 41. Der Winkel 43 ist vorzugsweise etwas kleiner als neunzig Grad. Die Keilflächen und die Stirnfläche erstrecken sich über die ganze Palettenlänge spiegelsymmetrisch auf beiden Seiten und sind bei allen Paletten gleich.

Zu diesen Randschienen passen formschlüssig keilförmige Umfangsnuten, zum Beispiel die Umfangsnut 44, von um vertikale Achsen 55, 56 ... drehbar am Gehäuse 19 gelagerten Rollen 45 bis 54. Diese Rollen sind ortsfest am Gehäuse 19 gelagert, das heißt, die Lager der Rollen sind in den drei orthogonalen räumlichen Richtungen fest montiert. Sie sind drehbar um Achsen senkrecht zur Zeichenebene der Figur 1.

Die Rollen 48 bis 53 sind auf die Bearbeitungsposition, die die Palette 5 einnimmt, verteilt und gegenüber der Höhenlage, die die auf den Gurtbändern 2 und 3 aufliegende Palette 6 einnimmt, um 0,8 mm angehoben und so angeordnet, daß die in Bearbeitungsposition befindliche Palette 5 formschlüssig stramm passend zwischen die Rollen 48 bis 53 paßt. Die Palette 5 ist auf diese Weise in ihrer Bearbeitungsposition etwas von den Gurtbändern 2 und 3 abgehoben, so daß sie keine Berührung mehr hat mit den Gurtbändern und die Gurtbänder nicht mehr an dieser Palette schleifen. Außerdem ist die Palette orthogonal in ihrer Betriebsstellung durch die Rollen 48 bis 53 justiert und in Verbindung mit dem Anschlag 35 in dieser Bearbeitungsstellung fixiert.

Die Rollen 49 und 54 sind am förderabwärtigen Ende der Bearbeitungsposition, die die Palette 6 einnimmt, angeordnet und haben, wie aus Figur 7 ersichtlich, eine etwas weitere Umfangsnut, so daß für die Palette 6 ein kleines Spiel 60 in Höhenrichtung verbleibt. In der Bereitstellungsposition liegt die Palette 6 am unteren Ende des Spiels 60 und ist dabei für den Einlauf in die Bearbeitungsposition im übrigen orthogonal vororientiert, wie in Figur 7 gezeichnet. Beim Einlauf in die Bearbeitungsposition wird die Palette 6 von den Rollen 47, 48, 52 und 53 in die Bearbeitungsposition angehoben und das Spiel 60 gestattet den für die in die Bearbeitungsposition einlaufende Palette erforderlichen Höhenausgleich. Die Rollen 47, 48, 52, 53 sind für das Anheben der in die Bearbeitungsposition einlaufenden Palette paarweise dicht nebeneinander ganz am förderaufwärtigen Ende der Bereitstellungsposition angeordnet.

Der Höhenausgleich kann gemäß einer Abänderung auch dadurch erzielt werden, daß die Rollen 49 und 54 exakt genauso ausgebildet werden wie die übrigen Rollen, also nicht mit Spiel in der Umfangsnut, aber auf ihrer Achse zwischen zwei durch Anschläge 61, 62 definierten Endstellungen auf und ab beweglich sind in einem Maße, wie es dem Spiel 60 entspricht. Diese Anschläge sind der Einfachheit halber in Figur 6 gestrichelt eingezeichnet, obwohl sie nicht zu der dort gezeichneten Rolle 48 gehören, sondern in dieser Abänderung zur Rolle 49 und 54.

In einer weiteren Abänderung können statt der Rollen auch nicht drehbare Keilelemente vorgesehen sein, an denen die Randrippen der Paletten entlanggleiten. Es ergibt sich dann, soweit es die Funktion angeht, das gleiche Querschnittsbild wie in Figur 6 und 7 gezeichnet.

Nach einer weiteren Abänderung ist es auch möglich, die Keilform umzukehren, das heißt anstelle einer Randrippe wie für die Palette 66 in Figur 8 dargestellt eine Außennut 65 vorzusehen und entsprechend für die Rollen, wie für die Rolle 67 gezeichnet, eine Umfangsrippe 68 vorzusehen. Die Winkelanordnungen und der formschlüssige Eingriff ist dann entsprechend wie im Text zu Figur 6 und 7 erläutert und auch der Höhenausgleich kann entsprechend erfolgen. Auch statt der Rolle 67 kann man einen entsprechend geformten Gleiter vorsehen.

Die Wirkungsweise der Vorrichtung aus Figur 1 - 7 ist folgende:
Der Palettenwechsel aus der in Figur 1 dargestellten Position, in der auf der Palette 5 angeordnete oder montierte Werkstücke, die nicht dargestellt sind, bearbeitet werden, wird ausgelöst durch ein äußeres Signal von einer Steuervorrichtung, die den Motor 20 einschaltet. Das führt zu zwei vollen Umdrehungen der Walze 17, die im Anschluß daran wieder in der gezeichneten Stellung stillgesetzt wird. Durch Beginn der Drehbewegung der Walze gerät der Mitnehmer 13 der in Bearbeitungsposition befindlichen Palette 5 in den axialen Auslaufabschnitt 31, erhält dabei durch die Austriebskurve 70 einen Schubs, verläßt die Führungsnut 16 und gleichzeitig gerät der Mitnehmer 14 der in Bereitstellungsposition befindlichen Palette 6 in den ersten Gang 28 der Führungsnut, so daß diese Palette in Förderrichtung 4 vorgeschoben wird. Dieser Vorschub erfolgt entsprechend der hohen Drehzahl des Motors 20 mit wesentlich höherer Fördergeschwindigkeit in Pfeilrichtung 4 als der Vorschub durch die langsam umlaufenden Gurtbänder 2, 3.

Die Palette 6 wird in etwa 0,4 sec. (Sekunden) durch die Walze 17 in die Position der Palette 5 getrieben und schiebt dabei die Palette 5 vor sich her, die sich dann anschließend auf die Gurtbänder 2, 3 absenkt und von diesen weitergefördert wird. Die Gurtbänder hätten statt der 0,4 sec. 12,0 sec. benötigt, die Palette 6 in die Bearbeitungsposition zu tragen.

Der Vorschub der Palette 6 ist beendet, sobald der Mitnehmer 14 in die Position, in der der Mitnehmer 13 in Figur 1 gezeichnet ist, einnimmt.

In Endstellung der Walze 17 oder kurz davor findet der Mitnehmer der nächstfolgenden Palette 7 Eingang in den axialen Abschnitt 32 bis zum Anschlag 36 und gelangt in die Stellung, in der der Mitnehmer 14 in Figur 1 gezeichnet ist. Die Folge ist, daß die Palette 7 sich nun in Bereitstellungsposition befindet. Alle nachfolgenden Paletten stoßen durch die Schubwirkung der Gurtbänder aneinander und rutschen beim Vorschub der Palette 7 um eine Palettenposition nach. Im Anschluß daran liegen sie, wie auch die in Bereitstellungsposition befindliche Palette 7, auf den darunter rutschenden Gurtbändern 2, 3.

Die Palette 6 ist auf ihrem Wege in die Bearbeitungsposition zunächst von den Rollen 48, 53 am vorderen Ende angehoben worden und dann von den Rollen 47, 52 am hinteren Ende hochgeschwenkt worden und läuft dann, losgelöst von den Gurtbändern 2, 3, durch die Rollen 45, 46, 50, 51 in die für die Palette 5 gezeichnete Bearbeitungsposition hinein.

Bemerkenswert ist, daß der Vorschub zum Palettenwechsel mit vielfach höherer Geschwindigkeit als der Umlaufgeschwindigkeit der Gurtbänder 2 und 3 entspricht erfolgen kann. Bemerkenswert ist weiter, daß die Paletten in ihrer Bearbeitungsposition selbsttätig, solide, präzis in einer vorgegebenen, orthogonal ausgerichteten Position fixiert sind. Bemerkenswert ist weiterhin, daß für den ganzen Wechselvorgang nur ein einziges Element aktiv durch einen Antrieb verstellt werden muß, nämlich die Walze 17. Für die Anschläge sind keine besonderen Verstellorgane erforderlich, weil sie in die Walze integriert sind und zum Anheben und Fixieren der in Bearbeitungsposition befindlichen Palette dienen neben ihrer Führungsfunktion die Rollen 45 bis 54, die nicht besonders angetrieben werden müssen.

## Patentansprüche

1. Vorrichtung zum Fördern von horizontal liegenden, stabilen Paletten (5,6) an eine Bereitstellungsposition, von dieser an eine dieser nachgeordnete Bearbeitungsposition, welche Paletten beidseitig sich in Förderrichtung erstreckende gerade Randschienen (8-11) aufweisen, wobei die Randschienen je zwei sich über die ganzen Randschienenlänge erstreckende Keilflächen aufweisen, die paarweise je einen zur Palettenseite offenen Keilwinkel (43) bilden und mit Keilelementen, (45-54) die entlang der Bahn der Randschienen angeordnet sind und Keilflächen aufweisen, die formschlüssig passend mit den Keilflächen der Randschienen zusammenwirken, dadurch gekennzeichnet,
daß ein in Förderrichtung ( 4 ) bewegtes Gurtband ( 2, 3 ) als antreibende Unterlage für die Paletten ( 5, 6 ) vorgesehen ist,
daß die Keilelemente beidseits entlang der Förderbahn der Paletten verteilte, aufgereihte, um ortsfeste vertikale Achsen ( 55, 56 ) lose drehbar gelagerte Rollen ( 45 - 54 ) sind,
daß ein oder mehrere Rollen (49, 54) beidseitig am förderabwärtigen Ende einer in Bereitstellungsposition befindlichen Palette ( 6 ) angeordnet sind,
daß die Höhenlage dieser der Bereitstellungsposition zugeordneten Rollen ( 49, 54 ) jeder Seite der Höhenlage einer auf den Gurtbändern ( 2, 3 ) liegenden Palette ( 6, 7 ) entspricht,
daß eine oder mehrere Rollen ( 50 - 53, 45 - 48 ) beidseitig einer in Bearbeitungsposition befindlichen Palette ( 5 ) angeordnet sind und
daß die Höhenlage dieser, der Bearbeitungsposition zugeordneten Rollen der Höhenlage einer von den Gurtbändern ( 2, 3 ) um einen zur Entkupplung hinreichenden kleinen Betrag ( 31 ) abgehobenen Palette entspricht.

2. Vorrichtung nach Anspruch 1, dadurch gekennzeichnet,
daß der zur Entkupplung hinreichend kleine Betrag 0,3 bis 10mm (Millimeter), vorzugsweise 0,8 mm beträgt.

3. Vorrichtung nach Anspruch 1 oder 2, dadurch gekennzeichnet,
daß die Keilform der der Bereitstellungsposition zugeordneten Rollen (49, 54) das für den Höhenausgleich nötige Spiel ( 60 ) bieten.

4. Vorrichtung nach Anspruch 1 oder 2, dadurch gekennzeichnet,
daß die der Bereitstellungsposition zugeordneten Rollen ( 49, 50 ) zum Höhenausgleich zwischen zwei Endstellungen (61, 62) höhenverstellbar sind.

5. Vorrichtung nach einem der vorhergehenden Ansprüche, dadurch gekennzeichnet,
daß beidseitig je zwei Rollen (47, 48, 52, 53) dicht am förderaufwärtigen Ende einer in Bearbeitungsposition befindlichen Palette und dicht nebeneinander angeordnet sind.

6. Vorrichtung nach einem der vorhergehenden Ansprüche, dadurch gekennzeichnet,
daß die Keilflächen (40, 41) der Randschienen ( 8 - 11 ) eine dachförmige, mit abgeflachter Spitze nach außen ragende Randrippe bilden und
daß die Rollen (45 - 54) je eine keilförmige Umfangsnut ( 44 ) aufweisen.

7. Vorrichtung nach einem der vorhergehenden Ansprüche, dadurch gekennzeichnet,
daß eine Walze ( 17 ) als Förderelement zum Fördern einer von den Gurtbändern ( 2, 3 ) abgehobenen beziehungsweise auf den Gurtbändern gleitenden Palette vorgesehen ist, die um eine Achse ( 18 ) parallel zur Förderrichtung der Förderbahn drehbar gelagert ist, auf ihrem Umfang eine mit einem an einer Palette ( 5, 6 ) angeordneten Führungselement ( 13, 17 ) zusammen-wirkende, wendelförmige, an beiden Enden offene Führungsnut ( 16 ) aufweist,
daß die Führungsnut an beiden Enden der Walze je einen sich in Umfangsrichtung erstreckenden Nutenabschnitt ( 29, 30 ) aufweist,
daß der am förderaufwärtigen Ende der Walze gelegene Nutenabschnitt ( 30 ) mit seiner gegen die Förderrichtung ( 4 ) gerichteten Nutenwand einen der Bereitstellungsposition zugeordneten Anschlag ( 36 ) bildet,
daß der am förderabwärtigen Ende der Walze gelegene Nutenabschnitt ( 29 ) mit seiner gegen die Förderrichtung weisenden Nutenwand einen der Bearbeitungsposition zugeordneten Anschlag ( 35 ) bildet und
daß die beiden Anschläge ( 35, 36 ) sich senkrecht zur Förderrichtung über den gleichen Umfangswinkel ( 39 ) der Walze erstrecken.

## Claims

1. Apparatus for conveying horizontally positioned, stable pallets (5,6) to a preparation position, from the latter to an operating position following the same, said pallets having on either side straight marginal rails (8-11) extending in the conveying direction, the marginal rails having in each case two wedge surfaces extending over the entire marginal rail length and which in pairs in each case form a wedge angle (43) open to the pallet side and with wedge elements (45-54), which are positioned along the path of the marginal rails and have wedge surfaces, which cooperate in positively fitting manner with the wedge surfaces of the marginal rails, characterized in that a belt (2,3) moving in the conveying direction (4) serves as the driving substrate for the pallets (5,6), that the wedge elements are rolls (45-54) loosely rotatable about fixed, vertical shafts (55,56), which are lined up and distributed on either side along the conveying path, that one or more rolls (49,54) are arranged on either side at the conveyor-downstream end of a pallet (6) in the preparation position, that the height position of said rolls (49,54) associated with the preparation position corresponds with each side of the height position of a pallet (6,7) located on the belts (2,3), that one or more rolls (50-53, 45-48) are positioned on either side of a pallet (5) located in the operating position and that the height position of these rolls associated with the operating position corresponds to the height position of a pallet raised from the belts (2,3) by a small amount (31) adequate for uncoupling purposes.

2. Apparatus according to claim 1, characterized in that the small amount adequate for uncoupling is 0,3 to 10 millimetres (mm) and preferably 0,8 mm.

3. Apparatus according to claims 1 or 2, characterized in that the wedge shape of the rolls (49,54) associated with the preparation position offers the clearance (60) necessary for height compensation purposes.

4. Apparatus according to claims 1 or 2, characterized in that the rolls (49,50) associated with the preparation position are vertically adjustable for height compensation between two end positions (61,62).

5. Apparatus according to one of the preceding claims, characterized in that on either side in each case two rolls (47,48,52,53) are positioned close to the conveyor-upstream end of a pallet in the operating position and are closely juxtaposed.

6. Apparatus according to one of the preceding claims, characterized in that the wedge surfaces (40,41) of the marginal rails (8-11) form a roof-shaped, outwardly projecting marginal rib having a flattened tip and that the rolls (45-54) in each case have a wedge-shaped circumferential groove (44).

7. Apparatus according to one of the preceding claims, characterized in that a roller (17) serves as a conveying element for conveying a pallet raised from or sliding on the belts (2,3), which is mounted in rotary manner about an axis (18) parallel to the conveying direction of the conveyor and has on its circumference a helical guide groove (16) open at both ends cooperating with a guide element (13,17) located on another pallet (5,6), that the guide groove at both ends of the roller has in each case a groove portion (29,30) extending in the circumferential direction, that the groove portion (30) located at the conveyor-upstream end of the roller forms with its wall directed against the conveying direction (4) a stop (36) associated with the preparation position, that the groove portion (29) located at the conveyor-downstream end of the roller forms with its groove wall directed counter to the conveying direction a stop (35) associated with the operating position and that the two stops (35,36) extend perpendicular to the conveying direction over the same inscribed angle (39) of the roller.

## Revendications

1. Dispositif pour transporter des palettes (5, 6) stables, disposées horizontalement, à une position d'attente et de celle-ci à une position d'usinage prévue à sa suite, les palettes présentant, sur les deux côtés, des barres de bordure (8 - 11) droites et orientées dans la direction de transport, qui possèdent chacune deux faces de coin s'étendant sur toute la longueur de la barre de bordure comme une paire de faces formant un angle de coin (43) ouvert vers le côté de la palette, le dispositif comprenant des éléments de coin (45 - 54) placés le long du trajet des barres de bordure et possédant des faces de coin qui coopèrent avec les faces de coin des barres de bordure en s'ajustant à complémentarité de formes dans ou sur celles-ci, caractérisé en ce
qu'une courroie plate (2, 3) déplacée dans la direction de transport ( 4 ) est prévue en tant que support d'entraînement pour les palettes ( 5, 6 ),
que les éléments de coin sont des galets (45 - 54) alignés de façon répartie, sur les deux côtés, le long du trajet de transport des palettes et montés librement rotatifs autour d'axes (55, 56) verticaux stationnaires,
qu'un ou plusieurs galets (49, 54) sont disposés, sur les deux côtés, à l'extrémité aval, dans le sens du transport, d'une palette (6) se trouvant en position d'attente,
que la position en hauteur de ces galets (49, 54) coordonnés à la position d'attente correspond, sur chaque côté, à la position en hauteur d'une palette (6, 7) reposant sur les courroies plates (2, 3),
qu'un ou plusieurs galets (50 - 53, 45 - 48) sont disposés sur les deux côtés d'une palette (5) se trouvant en position d'usinage et
que la position en hauteur de ces galets coordonnés à la position d'usinage correspond à la position en hauteur d'une palette soulevée des courroies plates ( 2, 3) d'une faible quantité (31) suffisante pour le désaccouplement.

2. Dispositif selon la revendication 1, caractérisé en ce que la faible quantité suffisante pour le désaccouplement est de 0, 3 à 10 mm ( millimètres ), de préférence de 0, 8 mm.

3. Dispositif selon la revendication 1 ou 2, caractérisé en ce que la forme en coin des galets (49, 54) coordonnés à la position d'attente offre le jeu (60) nécessaire à la compensation en hauteur.

4. Dispositif selon la revendication 1 ou 2, caractérisé en ce que les galets (49, 50) coordonnés à la position d'attente sont réglables en hauteur entre deux positions extrêmes (61, 62) en vue de la compensation en hauteur.

5. Dispositif selon une des revendications précédentes, caractérisé en ce que, sur chacun des deux côtés, deux galets (47, 48, 52, 53) sont disposés près de l'extrémité amont d'une palette se trouvant en position d'usinage et à proximité l'un de l'autre.

6. Dispositif selon une des revendications précédentes, caractérisé en ce que les faces de coin (40, 41) des barres de bordure (8 - 11) forment une nervure marginale en dièdre dirigée vers l'extérieur par un sommet aplati et que les galets (45 - 54) présentent chacun une rainure ou gorge périphérique (44) en forme de coin.

7. Dispositif selon une des revendications précédentes, caractérisé en ce
qu'un cylindre (17) est prévu en tant qu'élément de transport pour transporter une palette soulevée des courroies plates (2, 3) ou glissant sur ces courroies, cylindre qui est monté rotatif autour d'un axe (18) parallèle à la direction de transport du transporteur, et qui présente sur sa périphérie une rainure de guidage hélicoïdale (16) ouverte aux deux extrémités et coopérant avec un élément de guidage (13, 17) disposé sur une palette (5, 6),
que la rainure de guidage présente, à chacune des deux extrémités du cylindre, un segment de rainure (29, 30) s'étendant en direction circonférentielle,
que le segment de rainure (30) situé à l'extrémité amont du cylindre, dans le sens du'transport, forme, par son flanc de rainure dirigée en sens contraire à la direction de transport (4), une butée (36) coordonnée à la position d'attente,
que le segment de rainure (29) situé à l'extrémité aval du cylindre, dans le sens du transport, forme, par son flanc de rainure dirigé en sens contraire à la direction de transport, une butée (35) coordonnée à la position d'usinage et
que les deux butées (35, 36) s'étendent à angle droit par rapport à la direction de transport sur le même angle périphérique (39) du cylindre.
